# EUROPEAN PATENT SPECIFICATION

(11) **EP 4 492 590 B1**
(45) Date of publication and mention of the grant of the patent: **18.11.2026**
(21) Application number: 23185654.3
(22) Date of filing: 14.07.2023
(51) Int. Cl.: H01S 3/16, H01S 3/067, H01S 3/094

(54) **BROADBAND OPTICAL AMPLIFIER**
BREITBANDIGER OPTISCHER VERSTÄRKER
AMPLIFICATEUR OPTIQUE À LARGE BANDE

(43) Date of publication of application: 15.01.2025
(73) Proprietor: Adtran Networks SE, 98617 Meiningen (DE)
(72) Inventor: RAPP, Lutz, 98617 Meiningen (DE)
(74) Representative: Eder Schieschke & Partner mbB

(56) References cited:
- EP-A1- 0 989 693
- US-A- 6 049 418
- RAPP LUTZ: "Design and performance characteristics of extended C-band amplifiers", ITG-FACHBERICHT 305: PHOTONISCHE NETZE, 18 May 2022 (2022-05-18), Berlin, pages 31 - 37, XP093108312, ISBN: 978-3-8007-5877-7, Retrieved from the Internet <URL:https://ieeexplore.ieee.org/document/9861847> [retrieved on 20231204]

## Description

The present invention relates to a broadband optical amplifier configured to optically amplify an optical signal which is received at an amplifier input port and which comprises first spectral components lying within a predetermined first optical band and second spectral components lying within a predetermined second optical band, and to output the amplified optical signal to an amplifier output port. The present invention furthermore relates to a method for designing a broadband optical amplifier comprising the steps of creating a mathematical model of the broadband optical amplifier, determining the efficiency-optimized design of the reference broadband optical amplifier, determining a maximum value of the wavelength-dependent noise figure of the reference broadband optical amplifier, determining a modified design and using the modified design for setting up a corresponding physical broadband optical amplifier.

Long-haul optical transmission links that span hundreds or even thousands of kilometers, for example transatlantic optical transmission links, comprise optical amplifiers in order to compensate fiber losses by intermediate optical amplification of the one or more optical signals to be transmitted over the optical transmission links. The transmission links comprise a great number of amplifiers along the transmission links, since the maximum power that may be launched into an optical fiber is limited due to nonlinear fiber effects. In submarine links, the amplifiers are typically placed in essentially equal distance, whereas the distance between amplifiers may vary significantly in a terrestrial link. Generally, a single-stage optical amplifier comprises at least one pump laser, creating an optical pump signal having an optical spectrum that does not overlap with the optical spectrum covered by the optical transmission signals to be amplified. The pump signal is coupled into at least one optical amplifier medium (in the following also designated as optical pump medium) such as an erbium-doped fiber (EDF) in which the signals to be amplified are amplified by stimulated emission. In two-stage optical amplifiers, at least two optical pump media are used that might be provided with pump power by one or more pump lasers.

Since the transmission capacity that is in general defined by the optical bandwidth offered by the single-band amplifiers, mostly using the so-called conventional wavelength band (C-band), is in the meantime almost fully exhausted, it is expected that currently used amplification technologies are soon no longer able to meet the increased demand. Among several options for increasing the capacity of already installed fiber links, exploiting new wavelength bands appears to be the most economical step before burying additional or new types of fiber. Broadband (or multi-band) optical amplifiers can amplify an optical signal in a broader band or across more than one band. Fortunately, the currently most frequently used optical amplification technology based on erbium ions can be used not only for amplifying optical signals (e.g. the channel signals of an optical WDM signal, especially an optical DWDM signal) in the optical C-band, but can also be used for amplifying signals in the long wavelength band (L-band). However, such an upgrade is only possible if the performance characteristics of used amplifier setups is not significantly worse than their single-band counterparts. However, this requires an adaptation of the amplifier design to cater the new wavelength spectrum.

In order to enable broadband amplification in an optical amplifier, the amplifier may be designed in such a way that basically two amplifiers, each optimized for a single band, e.g. for the C-band and the L-band, respectively, are used in parallel. These multiple separate optical amplifiers are connected, at their input ports, via an optical band splitter that splits the incoming WDM signal into the respective optical bands in such a way that the optical signals lying in the respective band are fed to a dedicated optical amplifier that is optimized for the respective band, and, at their output ports, via an optical band combiner that combines the optical bands (i.e. the amplified optical signals lying in the respective band). However, the insertion loss of these components, especially the insertion loss introduced by the optical band splitter (which is nothing else than a passive band filter) that is placed in front of the optical amplifiers leads to a larger noise figure of the complete amplifier setup as compared with the individual amplifiers designed for each of the optical bands (e.g. the C-band and the L-band in a respective two-band optical amplifier or broadband optical amplifier that covers the C-band and the L-band). Placing a first amplification stage amplifying both bands in front of the optical band splitter is a promising approach to reduce the noise figure degradation, and is discussed in patent documents US6049418A and EP0989693A1. Simulation results for a two-band optical amplifier covering the C-band and the L-band clearly indicate that noise figures close to the noise figure of the individual amplifiers can be achieved in the C-band. However, noise figure degradation at the longer wavelength side of the L-band cannot be avoided (Lutz Rapp, "Design and performance characteristics of extended C-band amplifiers", ITG-Fachbericht 305: Photonische Netze, 2022; see also discussion of the prior art in US 6 049 418).

In such an optical amplifier structure, the amplification is carried out in two stages. The first stage comprises an optical pump, such as an optical pump laser, and a common erbium-doped fiber (EDF) which amplifies the signal across all bands. The term "common" signifies that optical signals lying within different wavelength bands are simultaneously amplified by one single common amplification fiber in this first stage. However, the gain of an optical amplification medium is in general wavelength-dependent. For example, the gain of a highly inverted optically pumped EDF decreases with increasing wavelength, i.e. an optical signal in the C-band is amplified to a higher extent than an optical signal in the L-band. In contrast, the second stage comprises several branches, each of them optimized for amplification in a respective wavelength band and comprising a separate optically pumped EDF, wherein the length of the respective EDF and the optical pump power as well as a (passive) optical gain flattening filter in each branch are chosen in such a way that the total wavelength-dependent gain of both stages is essentially constant within the whole optical bandwidth, i.e. within the respective bands.

As mentioned above, the noise figure of an amplifier is one of the most important limiting factors for the maximum transmission distance of an optical transmission link that comprises the optical amplifier. Even a two-stage optical amplifier having a common optical amplification medium in the first stage and two separate branches in the second stage that are optimized for a specific band reveals a higher maximum value of the wavelength-dependent noise figure in the band that is amplified less in the first stage as compared with the respective other band. Thus, the maximum transmission distance that is achievable with a two-stage broadband optical amplifier having such a structure is smaller than in case of using a single-band amplifier that covers a smaller bandwidth only, especially only the optical band that is amplified to a higher extent by the respective optical pump medium. Thus, upgrading an optical transmission link of a given length to a broader bandwidth (e.g. upgrading an optical transmission link that was designed for transmitting optical signals in the C-band, only, to an optical transmission link that is able to transmit optical signals in the C-band and the L-band) will not be possible in case the worse noise properties of such a broadband optical amplifier (i.e. the higher maximum value of the noise figure within the L-band) is unacceptably high, so that signals transmitted within the L-band cannot be properly received (e.g. with a sufficiently low bit error rate) at the far end of the transmission link.

Starting from this known prior art, it is an object of the present invention to provide a broadband optical amplifier with improved noise properties. It is a further object of the invention to provide a method for designing such a broadband optical amplifier.

The invention achieves these objects with the combination of features of the independent claims. Further embodiments of the invention are apparent from the dependent claims.

The invention starts from the finding that the problems, automatically appearing when a common amplification fiber in a broadband optical amplifier is elongated compared to the common amplification fiber in an efficiency-optimized broadband optical amplifier, can be solved by increasing the total length of the amplification fibers for the first optical band and/or adding additional attenuation within the first optical band to the first branch of the second stage and/or adding additional attenuation within the first optical band to the first stage. In other words, the invention deliberately departs from the established path of using an efficiency-optimized design of an optical amplifier and accepts a degradation in efficiency to provide a new design of a broadband optical amplifier that reveals an improved noise performance.

According to the invention, the broadband optical amplifier is configured to optically amplify an optical signal which is received at an amplifier input port and which comprises first spectral components lying within a predetermined first optical band. The first optical band may cover a first wavelength range. The optical signal further comprises second spectral components lying within a predetermined second optical band. The second optical band covers a second wavelength range that does not overlap with the first wavelength range. The broadband optical amplifier is further configured to output the amplified optical signal to an amplifier output port.

The broadband optical amplifier comprises a first stage and a second stage. The first stage comprises a common optical amplification fiber and a common optical pump source configured to feed an optical pump power into the common optical amplification fiber. The common optical pump source or any optical pump source used in the invention may be a pump laser, especially a semiconductor pump laser diode, creating an optical pump signal having an optical spectrum that does not overlap with the optical spectrum covered by the optical transmission signals to be amplified. The common optical amplification fiber, or any amplification fiber used in the invention, may be an erbium-doped fiber (EDF).

The first stage is configured to amplify all spectral components of the optical signal and to feed an amplified optical signal to the second stage. As the gain of an optical amplification fiber of a given kind, e.g. an EDF, is a function of the wavelength of the optical signal to be amplified, it is assumed that the wavelength-dependent gain of the common optical amplification fiber for the first spectral components is higher than for the second spectral components. For example, the gain of an EDF typically decreases with increasing wavelength. In this case, the second optical band covers higher wavelengths than the first optical band. However, the invention is not limited to such embodiments. It also covers embodiments in which the common amplification fiber reveals a wavelength-dependent gain that (in a given broad band comprising the first and second optical band) increases with increasing wavelength. For example, if the amplification fiber is a standard single-mode fiber and pumps at a wavelength suitable to create stimulated Raman scattering (which of course leads to a much lower gain as compared to a pumped EDF), the optical gain increases with increasing wavelength in a (broad) band covering the C-band and the L-band.

In an efficiency-optimized design, the (total) length of an amplification fiber, which determines the gain within the first and the second band, i.e. the length of the common amplification fiber plus the length of the first or second amplification fiber, respectively, the pump power of the optical pump sources (i.e. the corresponding wavelength-dependent average inversion within the amplification fiber) and the wavelength dependency of the respective GFF, in order to achieve a predetermined gain or course of the gain within the first and second band, are determined in such a way that the respective GFF dissipates a minimum amount of optical energy of the optical signals to be amplified, only. In other words, the pump power and the length of the respective (total) amplification fiber is determined in such a way that (a) a given minimum (wavelength-dependent) gain is achieved within the respective optical band and (b) that the integral over the wavelength-dependent curve of the gain without the presence of the GFF (or, in general, the gain shaping filter (GSF)) is at a minimum. The term "efficiency" or "power efficiency", in this context, means the ratio of the increase in the optical power of the amplified optical signal (i.e. the difference of the optical power of the amplified optical signal that is output by the optical amplifier and the power of the optical signal that is input into the optical amplifier) divided by the optical pump power that is supplied to all optical amplification fibers of the optical amplifier.

The second stage comprises a first and a second branch and is configured to feed the amplified first spectral components of the amplified optical signal to the first branch, to feed the amplified second spectral components of the amplified optical signal to the second branch, to further amplify the amplified first and second spectral components within the first and second branch, and to combine and output the further amplified first and second spectral components as amplified optical signal at the amplifier output port.

The first branch of the second stage comprises a first optical amplification fiber and a first optical pump source configured to feed an optical pump power into the first optical amplification fiber and a first optical gain shaping filter. The second branch of the second stage comprises a second optical amplification fiber and a second optical pump source configured to feed an optical pump power into the second optical amplification fiber and a second optical gain shaping filter. Each of the gain shaping filters may be realized as a gain flattening filter (GFF), i.e. a passive optical filter having a wavelength-dependent attenuation that reduces the total gain (of both stages) across the first or second optical band to an essentially constant value at the amplifier output that is equal to the minimum gain within the respective optical band without the presence of the GFF in the respective branch of the second stage. In general, the gain shaping filter may be realized in such a way that a predetermined course of the wavelength dependency of the total gain is achieved within the respective optical band by correspondingly adding an appropriate wavelength-dependent attenuation in the respective branch of the second stage. This predetermined course may for example be rising or descending linearly.

The optical pump power of the common optical pump source, the optical pump power of the first and second optical pump source, the spectral attenuation characteristic of the first and second gain shaping filter and the length of the common amplification fiber and the length of the first and second amplification fiber are determined in such a way that a predetermined spectral course of the gain is achieved. For example, the broadband optical amplifier might be designed in such a way that a constant optical gain is achieved within the whole broad band, i.e. the first and the second band.

According to the invention, the length of the common amplification fiber is greater than the length of the common amplification fiber of a reference broadband optical amplifier of an efficiency-optimized design. The reference broadband optical amplifier of an efficiency-optimized design has an identical structure and includes, apart from the length of the common amplification fiber and the lengths of the first and second amplification fiber, identical components. The increase in length of the common amplification fiber is determined in such a way that the broadband optical amplifier reveals a lower maximum value of a wavelength-dependent noise figure within the first and second optical band than the comparable broadband optical amplifier. The increase in length of the common amplification fiber may be determined by simulation using a mathematical model that describes the (especially) optical characteristics of the components of the optical amplifier.

Such an increase in the length of the common amplification fiber and simultaneous reduction of the maximum value of the wavelength-dependent noise figure as compared to the maximum value of the wavelength-dependent noise figure of the efficiency-optimized design is achieved by one or more of the following features.

One measure is decreasing the optical pump power of the common optical pump source in the first stage. This decrease may be executed by a control device. This decrease in the optical pump power, together with an increase in length of the common amplification fiber, leads to a still sufficiently high gain within the first optical band, wherein the (minimum) gain within the second band is higher as compared to the efficiency-optimized design.

A second measure is adding additional attenuation within the first optical band to the first branch of the second stage. This additional attenuation may be realized as a passive optical attenuator. Due to the increased length of the common amplification fiber, also this measure leads to an increased signal power of the optical signal to be amplified in the second optical band.

A third measure is adding additional attenuation within the first optical band to the first stage. This additional attenuation may be realized as a passive physical component having an appropriate wavelength-dependent attenuation. For example, a wavelength-dependent optical 1x2 splitter may be provided within the optical path of the first stage. Increasing the attenuation in the first band only avoids an inadmissibly high gain within the first band which might occur due to the increased length of the common amplification fiber. An inadmissibly high gain might lead to power values of amplified signals or signal components that exceed a limit as of which nonlinear optical effects may lead to signal degradation.

A fourth measure is elongating the total length of the amplification fiber for the first optical band. The total length of the amplification fiber for the first optical band is the length of the common optical amplification fiber in the first stage plus the length of the first amplification fiber in the second stage. Elongating the total length of the amplification fiber for the first optical band with constant pump power, lowers the average inversion in the first band path. This, in turn, leads to a change of the wavelength dependent gain within the first optical band, i.e. the "state of optimum power efficiency" is left, as the gain shaping filter needs to dissipate a higher amount of optical energy in order to create the desired (e.g. flat) wavelength dependency of the gain (within the first and second optical band). As a result of the increased total length of the amplification fiber for the first optical band, it is possible to increase the length of the common optical amplification fiber as compared to the efficiency optimized design. This leads to the desired reduction of the maximum noise figure within the first optical band.

All measures contribute, together with the increased length of the common amplification fiber, to an increased (minimum) gain of the first stage within the second optical band. As a result, the negative influence of the insertion loss induced by the optical band splitter that separates the signals within the first and second optical band on the noise figure is reduced and the maximum wavelength-dependent noise figure (which, in general, lies within the second optical band) is reduced, i.e. the noise characteristic of the optical amplifier is improved as compared to the efficiency-optimized design. Of course, any combination of these three measures may be applied in order to provide a broadband optical amplifier with improved noise properties.

As already mentioned above, an additional attenuation component may be provided within the first common stage, which is configured to attenuate the first spectral components to a higher extent than the second spectral components. This additional attenuation component may be provided between a first part and a second part of the common optical amplification fiber or downstream of the common optical amplification fiber. "Downstream" in this case means close to the components of the second stage, i.e. downstream with respect to the propagation of the optical signals to be amplified through the optical amplifier. Likewise, "upstream" designates the opposite direction or positions of components, respectively.

According to an embodiment of the invention, an additional attenuation is added to the first branch of the second stage, which is preferably essentially constant within the first band. The additional attenuation may also be wavelength-dependent. Such an additional attenuation dependably enables the optical signal within the first band to reach the target optical output power.

According to an embodiment of the invention, the additional attenuation in the first branch is created by an attenuation component which is provided between a first part and a second part of the first optical amplification fiber and/or upstream and/or downstream of the common optical amplification fiber.

According to an embodiment of the invention, the gain shaping filter is provided between a first part and a second part of the first optical amplification fiber or upstream or downstream of the common optical amplification fiber and at least a portion of the additional attenuation is included within the first gain shaping filter.

According to an embodiment of the invention, the ratio of the total lengths of the amplification fibers for the second band and first band (i.e. ratio of the total length of the common amplification fiber and the first amplification fiber and the total length of the common amplification fiber and the second amplification fiber) is reduced by 20%, preferably by 40%, more preferably by 50% and even more preferably by 60% as compared with the energy-optimized design.

According to the invention, a method for designing a broadband optical amplifier as described above comprises the following steps:
First, a mathematical model is created that is capable of describing the broadband optical amplifier. The mathematical model is configured to determine the wavelength-dependent noise figure of the broadband optical amplifier in dependency of
- the optical properties of the components of the first and second stage of the broad-band optical amplifier, i.e. especially the properties of the common amplification fiber and the first and second amplification fiber (especially the length thereof), the properties of the first and second gain shaping filter, the properties of an optical band splitter that is configured to separate, in the second stage, signal components of the optical signal to be amplified that lie in the first and second optical band, respectively, and the properties of an optical band combiner that is configured to combine, in the second stage, the amplified signal components, and
- the optical pump power that is fed to the common optical amplification fiber, the optical pump power that is fed to the first optical amplification fiber and the optical pump power that is fed to the second optical amplification fiber.

The properties of the optical components and the optical pump powers are determined in such a way that a predetermined total optical gain (more precisely, a predetermined optical gain spectrum, i.e. a predetermined wavelength-dependent course of the gain) of the broadband optical amplifier is achieved.

In further steps, the efficiency-optimized design of the reference broadband optical amplifier is determined using the mathematical model and a maximum value of the wavelength-dependent noise figure of the reference broadband optical amplifier is determined as a reference value. The previously described steps can be carried out in the order they were described in or any other order.

In a next step, a modified design is determined that has, as compared to the efficiency-optimized design of the reference broadband optical amplifier, an increased length of the common amplification fiber and at least one of the three further features described above, namely, decreasing the optical pump power of the common optical pump source and/or adding an additional attenuation within the first optical band to the first branch of the second stage and/or adding an additional attenuation within the first optical band to the first stage. Of course, the modified design is determined in such a way that it provides the same gain spectrum as the reference design.

In a further step, a maximum value of the wavelength-dependent noise figure of the modified design is determined as a design value. If the design value, as a minimum requirement, is lower than the reference value, the modified design is used for setting up a corresponding physical broadband optical amplifier.

As already mentioned, the length of the common optical amplification fiber of the reference design and the modified design may be determined to be greater than or equal to 80%, preferably 85%, more preferably 90% and even more preferably 95% of the total length of the common optical amplification fiber and the first optical amplification fiber. It is, in addition, possible to determine a minimum length of the first amplification fiber in order to ensure a sufficient scope for the gain that is provided by the respective branch of the second amplifier stage.

According to an embodiment of the method, at least one of the features of the group consisting of a predetermined decreased value of the optical pump power of the common optical pump source, an additional attenuation added within the first optical band to the first branch of the second stage, an additional attenuation added within the first optical band to the first stage and an elongated total length of the amplification fiber for the first optical band is specified first, and the corresponding increased length of the common amplification fiber is determined by using the mathematical model.

In a further embodiment, the steps of determining a modified design and determining a maximum value of the wavelength-dependent noise figure of the modified design as a design value are repeated until the respective design value is equal to or lower than a predetermined threshold value. This threshold value may be appropriate to transmit the amplified optical signal (more precisely, all components, e.g. optical channel signals, of the amplified optical signal) via an optical transmission link that is connected to the output port of the broadband optical amplifier in such a way that it can be correctly received at the end of the transmission link.

The modified design that is used to set up a corresponding physical broadband optical amplifier may be specified in such a way that it provides a power conversion efficiency equal to or higher than a predetermined minimum value.

Any or all of the steps of the design method according to the invention may be realized by an appropriate software or computer program product that is configured to carry out the steps according to the method of the invention when loaded into and run on computer.

Embodiments of the invention will now be described with reference to the drawings. In the drawings,
- Fig. 1: shows a state of the art single-stage broadband optical amplifier setup, wherein the total (broad) band is divided into two bands that are separately amplified;
- Fig. 2: shows a state of the art two-stage broadband optical amplifier setup, wherein the total band is amplified in a first stage and then divided into two bands that are separately amplified in a second stage;
- Fig. 3: shows three diagrams in order to explain the use of a gain flattening filter in an optical amplifier, wherein Fig. 3a shows a curve of the gain of an optical amplifier vs. the wavelength without the influence of an optical gain flattening filter, Fig. 3b shows a curve of the transmission of an optical gain flattening filter vs. the wavelength and Fig. 3c shows the total gain of the optical amplifier including the influence of the optical gain flattening filter;
- Fig. 4: shows a diagram including simulated curves of the power conversion efficiency vs. average inversion of a state-of-the-art amplifier setup for the C-band and the L-band, respectively;
- Fig. 5: shows a diagram including simulated curves of required length of an EDF vs average inversion of a state-of-the-art amplifier setup for the C-band and the L-band, respectively;
- Fig. 6: shows a diagram including simulated curves of a parametric representation of the dependence of noise figure and optical power conversion efficiency on the fiber length and the average inversion, respectively, for the C-band and the L-band, respectively;
- Fig. 7: shows a power profile of a state-of-the-art two-stage broadband optical amplifier setup (gain: 15 dB, output power: 18 dBm);
- Fig. 8: shows a schematic structure of a two-stage broadband optical amplifier according to the invention;
- Fig. 9: shows a power profile of a two-stage broadband optical amplifier setup according to the invention (gain: 15 dB, output power: 18 dBm).

In order to facilitate the understanding of the invention, in the following, the state of the art will be explained in further detail. In a broadband optical amplifier, all signals to be amplified (which, of course lie within the (broad) optical band the amplifier is designed for), e.g. the optical channel signals present within a wavelength-division multiplexing (WDM) signal, should experience the same gain. However, the gain spectrum of an optical amplification fiber, e.g. an erbium-doped fiber (EDF), is not flat but shows a strong wavelength dependency. For example, in case of an EDF, the shorter wavelengths of the C-band are amplified to a higher extent than the longer wavelengths in the L-band. Therefore, an optical signal in the L-band requires a longer EDF than an optical signal in the C-band in order to reach the same gain.

In the following, state-of-the-art broadband optical amplifiers as well as embodiments according to the invention will be explained as optical amplifiers that are designed in order to amplify optical signals lying within a broad band comprising the optical C-band (between 1530 nm and 1565 nm) and the neighboring L-band (between 1565 nm and 1625 nm). It is further assumed that the optical amplification medium is an optically pumped EDF. It shall, however, be noted that the invention may be realized with respect to any optical (broad) band using any appropriate amplification fiber.

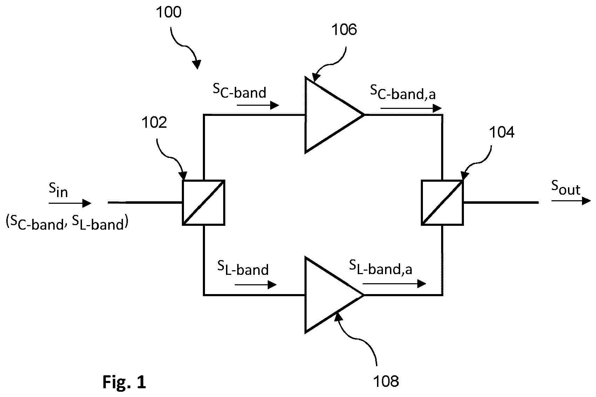

Due to the wavelength dependency of the gain of an optical amplification fiber, broadband optical amplifiers were initially designed as optical amplifiers having two separate branches, wherein each branch is designed to amplify a respective part of the broad optical band, only. Such a design is schematically shown in Fig. 1. The shown single-stage broadband optical amplifier 100 comprises an optical band splitter 102, a C-band amplifier 106, an L-band amplifier 108 and an optical band combiner 104. Each of the C-band amplifier 106 and the L-band amplifier 108 comprises an optical pump source, e.g. a pump laser, and an optical amplification fiber (not shown). Due to the dependency of the gain of an EDF on the wavelength and its length (for a given pump power), the length of the amplification fiber in the L-band amplifier is chosen considerably longer than the length of the amplification fiber in the C-band amplifier in order to reach a gain lying in at least the same order of magnitude.

An optical input signal Sᵢₙ that is fed to an input port of the broadband optical amplifier 100 and that comprises components within both bands is separated, with respect to its wavelength components, by the passive optical band splitter 102. Signal portions S_{C-band} lying in the C-band are output at a C-band port of the optical band splitter 102 and are directed to the C-band amplifier 106, and signal portions S_{L-band} lying in the L-band are output at an L-band port of the optical band splitter 102 and are directed to the L-Band amplifier 108. As mentioned above, the C-band signal portions may comprise optical channel signals of a WDM optical signal Sᵢₙ lying within the wavelength range of the C-band and the L-band signal portions S_{L-band} may comprise the optical channel signals lying within the wavelength range of the L-band. The C-band amplifier 106 optically amplifies the C-band signal portions S_{C-band}, wherein the respective gain is determined by the optical pump power created by its optical pump source and the length and optical properties of its optical amplification fiber. The resulting amplified C-band signal portions S_{C-band,a} output by the C-band amplifier 106 are fed to a C-band port of the passive optical band combiner 104. Likewise, the L-band amplifier 108 amplifies the L-band signal S_{L-band} using its optical pump and optical amplification fiber. The resulting amplified L-band signal portions S_{L-band,a} output by the L-band amplifier 108 are fed to an L-band port of the optical band combiner 104. The optical band combiner 104 combines the two amplified signal portions S_{C-band,a} and S_{L-band,a} and outputs a corresponding amplified input signal Sᵢₙ as an output optical signal Sₒᵤₜ.

However, a disadvantage of this known design of a broadband optical amplifier 100 is its unfavorable noise behavior as the noise figure of this design or structure is considerably high. The reason therefor is the insertion loss introduced by the passive optical band splitter 102 which leads to a respective attenuation of the non-amplified optical input signal Sᵢₙ before any amplification takes place. This in turn increases the noise figure of the chain consisting of a respective attenuator (i.e. defined by the insertion loss of the band splitter 102) and the respective optical amplifier 106, 108.

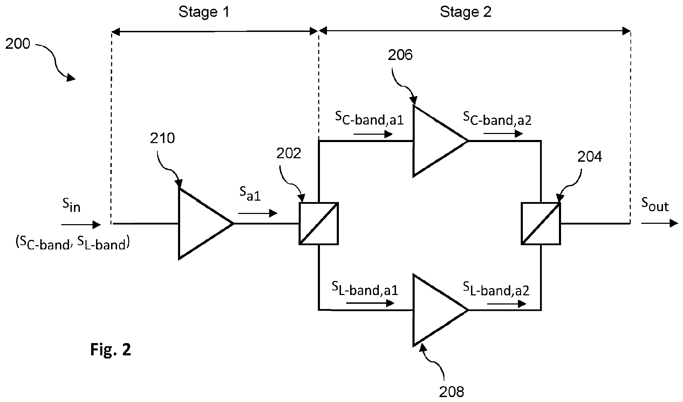

A promising solution to improve the noise behavior of a broadband optical amplifier that reveals such a separate amplification of signal portions of the signal Sᵢₙ to be amplified in different (usually immediately) adjacent (non-overlapping) bands is a two-stage structure of a broadband optical amplifier 200 as schematically shown in Fig. 2. The two-stage broadband optical amplifier 200 comprises a common optical amplifier 210 in a first stage (stage 1) which comprises an optical pump and an optical amplification fiber, e.g. an EDF (not shown). The common optical amplifier 210 amplifies the optical input signal Sᵢₙ across the whole broad optical band the broadband optical amplifier 200 is designed for and outputs the amplified signal Sᵢₙ as optical signal Sₐ₁.

In the following description, it is again assumed that the broadband optical amplifier 200 is designed in order to amplify an optical signal Sᵢₙ that may comprise signal portions S_{C-band} lying in the optical C-band and signal portions S_{L-band,in} lying in the optical L-band, i.e. the broadband optical amplifier is designed to cover the (broad) band comprising the C-band and the (neighboring) L-band. As the optical band splitter 202 in practice will have finite edge slopes of its filter properties that are used to separate the C- and L-band portions of the signal Sᵢₙ, the optical signal Sᵢₙ might be created in such a way that a separation band lying between C-band and L-band portions of the broad band is kept free from signal portions to be amplified. In this way, it is avoided that an optical transmission signal to be amplified is partially amplified in each of the branches of the second stage of the broadband optical amplifier 200.

As apparent from Fig. 2, the two-stage broadband optical amplifier 200 further comprises a second stage (stage 2) comprising a passive optical band splitter 202, which splits the amplified optical signal Sₐ that is output by the common optical amplifier 210 into the amplified C-band signal portions S_{C-band,a1} and the amplified L-band signal portions S_{L-band,a1}, and a passive optical band combiner 204, which combines the further amplified signal portions S_{L-band,a2} and S_{C-band,a2} that are output by the optical amplifiers 206 and 208, respectively, into the optical output signal Sₒᵤₜ that is output at the output port of the broadband optical amplifier 200.

Apparently, the second stage of the two-stage broadband optical amplifier 200 comprises the same components as the broadband optical amplifier 100 shown in Fig. 1 with the only difference being the lengths of the amplification fibers comprised by the optical amplifiers 206, 208. In the example of an optical signal comprising signal portions in the C-band and the L-band and the optical amplification fiber being an EDF, the total length of the amplification fibers that amplified the C-band signal portions for the C-band (i.e. the length of the common amplification fiber of the amplifier 210 plus the length of the amplification fiber of the C-band amplifier 206 of the second stage) is shorter than the total length of the amplification fiber for the L-band (i.e. the length of the common amplification fiber of the amplifier 210 plus the length of the amplification fiber of the L-band amplifier 208 of the second stage). In the following, the total length of the amplification fibers that is effective for the C-band (i.e. the lengths of the common amplification fiber and the C-band amplification fiber) is designated as "the effective length of the C-band amplification fiber" and a fictitious fiber having the length of the common amplification fiber and the C-band amplification fiber is designated as "effective C-band amplification fiber". Likewise, the total length of the amplification fiber that is effective for the L-band (i.e. the lengths of the common amplification fiber and the L-band amplification fiber) is designated as "the effective length of the L-band amplification fiber" and a fictitious fiber having the length of the common amplification fiber and the L-band amplification fiber is designated as "effective L-band amplification fiber".

Since the gain of an EDF (that is pumped with a predetermined optical pump power) in the C-band is for useful inversion levels considerably higher than in the L-band, the effective length of the effective C-band fiber, necessary to reach the predetermined gain, is much shorter than the effective length of the effective L-band fiber. The length of the common amplification fiber is therefore limited by the effective length of the C-band fiber as, at a maximum, the length of the common amplification fiber is equal to the whole effective length of the C-band fiber.

In general, the lengths of the erbium-doped fiber coils and thus the inversion levels during operation of known amplifier designs are optimized for maximum power conversion efficiency. This also applies to the two-stage optical amplifier structure as shown in Fig. 2 having a common first stage and a second stage that comprises two separate branches, wherein each branch is designed to optically amplify a first or second partial band of the whole broad band only. Requiring a maximum power conversion efficiency for this design means that a maximum power conversion efficiency shall be obtained for each of the first and second partial band, i.e. a respective optimum portion of the optical pump energy of the pump sources comprised by the optical amplifiers 210, 206 and 208 is converted into optical signal power of the optical signal Sᵢₙ to be amplified.

It is to be noted in this respect that in each optical path defined for the separate first and second partial band a gain flattening filter is provided, wherein each of the gain flattening filters (GFF) is designed in such a way that an essentially constant optical gain is achieved for all possible optical signal portions that might be comprised by the optical input signal Sᵢₙ to be amplified, i.e. the optical gain shall be essentially constant over the whole broad band the optical amplifier is designed for. That is, the spectral optical transmission (or transmittance, i.e. the optical power transmitted through the optical filter divided by the optical power incident onto the optical filter) of each GFF is designed in such a way that it is complementary to the spectral gain provided by the respective effective amplification fiber (e.g. the effective C-band or L-band amplification fiber). As a result, a flat course of the spectral gain is achieved.

As the course of the spectral gain of an optical amplification medium, e.g. an EDF, depends on the average inversion, i.e. on the pump power, the signal power and the length of an amplification fiber, an optimum conversion efficiency is achieved if the average loss GFF (over the whole respective partial band) is at a minimum. This can in turn be achieved if the spectral gain within the respective partial band reveals a minimum fluctuation (i.e. the integral over the course of the wavelength-dependent gain minus the minimum gain value within the respective partial band over the whole partial band is minimum). It is of course desirable that the (normalized) transmission of the optical filter is one for all wavelengths within the respective partial band in which the gain reveals the minimum value within the respective partial band. However, in practice, such filters come with some (minimum) insertion loss so that the resulting gain is smaller than the minimum gain provided by the EDF.

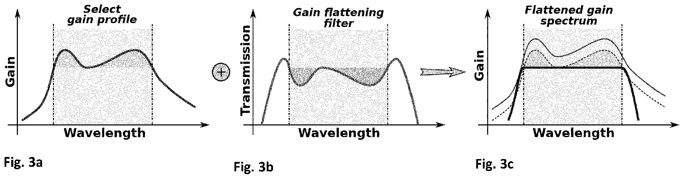

The general purpose and functionality of such a passive optical GFF are shown in Fig. 3. Fig. 3a shows a schematic course of the wavelength-dependent gain of an EDF for a given average inversion created within an optical amplification fiber. Fig. 3b shows the course of the spectral transmission of a GFF that is designed in such a way that a constant gain, i.e. a flat course of the spectral gain, is achieved over the whole interesting optical band which is indicated in gray between two dashed vertical borderlines in Fig. 3a to Fig. 3c. The superposition of the curves of the spectral gain shown in Fig. 3a and the spectral transmission of the GFF shown in Fig. 3b are visualized in Fig. 3c. The flat curve in Fig. 3c represents the constant optical gain over the whole interesting optical band achieved by the presence of the GFF within the respective optical path.

As already mentioned above, the invention is based on the finding that such an efficiency-optimized design of a two-stage optical amplifier having a structure according to Fig. 2 may not reveal a sufficiently low maximum value of the wavelength-dependent noise figure within the whole interesting optical band. Especially, if EDFs are used as optical amplification fibers in order to realize a broadband optical amplifier for the C- and L-band, the maximum value of the noise figure within the longer wavelengths of the L-band may be unacceptably high so that such a broadband optical amplifier cannot be used to replace an existing optical amplifier when upgrading an existing transmission link to a broader optical band.

As explained above, a first step for improving the noise figure of the whole amplifier 100 may therefore be to choose the length of the common amplification fiber included within the amplifier 210 of first stage as long as possible after having determined the effective length of the C-band amplification fiber (in general: the effective length of the amplification fiber for the optical band which encounters the higher gain in the common amplification fiber) of the efficiency-optimized design as in this way the adverse effect of the insertion loss introduced by the optical band splitter can be reduced. Of course, this maximum length of the common amplification fiber is equal to or slightly lower than the corresponding length of the C-band amplification fiber of the efficiency-optimized design. However, this measure may not be sufficient in order to obtain a (wavelength-) dependent noise figure that is sufficiently low within the L-band (in general: the effective length of the amplification fiber for the optical band which encounters the lower gain in the common amplification fiber).

In the following, a method according to the invention to design a two-stage broadband optical amplifier having the structure according to Fig. 2 is described:
According to the invention, a mathematical model of the broadband optical amplifier is created which is configured to determine, for a predetermined spectral gain (e.g. a wavelength-independent constant gain, in case a GFF is used in each branch of the second stage), the essential parameters of the optical amplifiers 210, 206 and 208, namely, the length of the optical common optical amplification fiber, the lengths of the (first and second) optical amplification fiber in each of the branches of the second stage, i.e. the length of the optical C-band amplification fiber of the optical amplifier 206 and the length of the optical L-band amplification fiber of the optical amplifier 208, and the optical pump power of each of the optical amplifiers 210, 206, 208 that is coupled into the respective amplification fiber. For this purpose, the mathematical model takes into account the optical properties of the optical amplification fibers (e.g. standard EDFs) and the optical properties of the optical band splitter 202 and the optical band combiner 204, especially the insertion loss thereof (which may be wavelength-dependent).

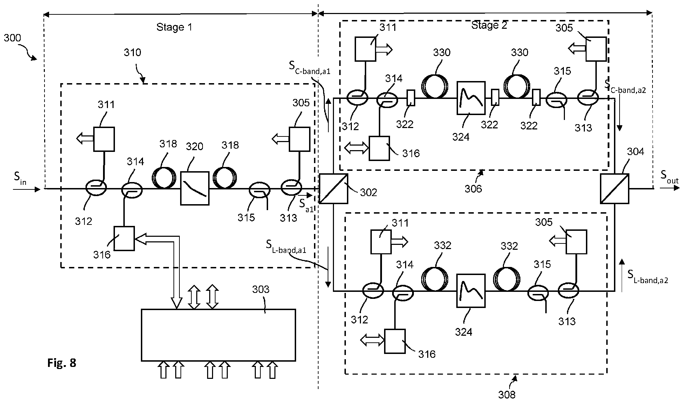

In addition, the mathematical model is configured to determine the spectral attenuation (or transmission) of each of the gain shaping filters (GSF) (which in practice will mostly be GFFs) comprised by the optical amplifiers 206, 208. Of course, the mathematical model may be configured to take into account or to describe a specific more detailed structure of the broadband optical amplifier, e.g. as shown in Fig. 8 (see below).

The mathematical model is further configured to determine the wavelength-dependent noise figure of the broadband optical amplifier having the structure according to Fig. 2 and revealing the properties explained above.

The mathematical model can be configured in such a way that the optical pump powers and effective optical lengths (for the effective C-band and L-band amplification fibers) are determined in such a way that a predetermined value of a predetermined (minimum total) optical gain of the broadband optical amplifier is achieved within the whole respective optical band by using an appropriate design of the corresponding GFF. This requires to first choose the corresponding wavelength-dependent optimum course of the gain dependent on the average inversion within the respective amplification fiber, i.e. the gain curve vs. the wavelength requiring the minimum amount of optical signal power (dependent on the wavelength) to be attenuated (i.e. "flattened") by the respective GFF. Using this spectral curve of the gain (separately for the C-band and L-band), the corresponding effective length of the amplification fiber (i.e. the effective length of the C-Band and L-band amplification fiber) can be determined since the (wavelength-dependent) gain for a given average inversion remains essentially constant per unit of the amplification fiber length.

It shall be noted that the average inversion describes the mean inversion level of an optical amplification fiber across its entire length. Within an EDF pumped by a single forward propagating pump signal, the inversion level starts at a certain level and decreases with the length of the fiber, wherein the inversion level describes the percentage of "inverted" atoms in the fiber, meaning the number of atoms in an excited state.

As explained above, the mathematical model created is used to determine, in a first step, an efficiency-optimized design of the broadband optical amplifier having the structure shown in Fig. 2, i.e. the corresponding lengths of the optical amplification fibers, the optical pump powers fed into the optical amplification fibers and the spectral courses of the GSFs, in order to provide a predetermined spectral gain (which may be constant if GFFs are used).

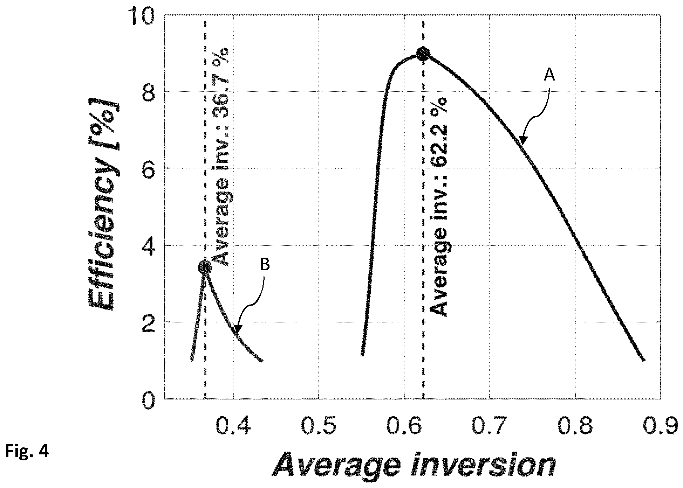

As mentioned above, the separate optical amplification of the two optical bands in each of the branches of the second stage of the broad-band optical amplifier leads to the advantage of an increase in total efficiency as the separate optimization of the efficiency in each of the branches requires a lower total amount of optical power to be attenuated by the two GSFs (which may be GFFs). This is illustrated in Fig. 4, which shows curves for the optical power conversion efficiency versus the average inversion for a C-band amplifier (curve A) and an L-band amplifier (curve B) using a standard EDF (and a respective GFF) for a constant (flattened) amplifier gain of 25 dB (of a simple single-stage amplifier using a standard EDF). For both optical bands, there is a well-defined value for the average inversion at which maximum efficiency is achieved. Apparently, L-band optical amplifiers are best operated at average inversion levels that are significantly lower than those of the C-band in order to achieve an optimum efficiency. Furthermore, the efficiency in the L-band is more sensitive to the average inversion, shown by the narrow peak of curve B.

As shown in Fig. 4, the efficiency of an optical amplifier using a standard EDF reaches a maximum (of approximately 9%) at an average inversion of 62.2% in the optical C-band. In the optical L-band, a maximum (of approximately 3.5%) is reached at an average inversion of 36.7%. Of course, the dependency illustrated by Fig. 4 is, in general, also valid for the cascades of amplification fibers formed by the common optical amplification fiber and the respective amplification fiber in each of the branches of the second stage of the amplifier structure according to Fig. 2.

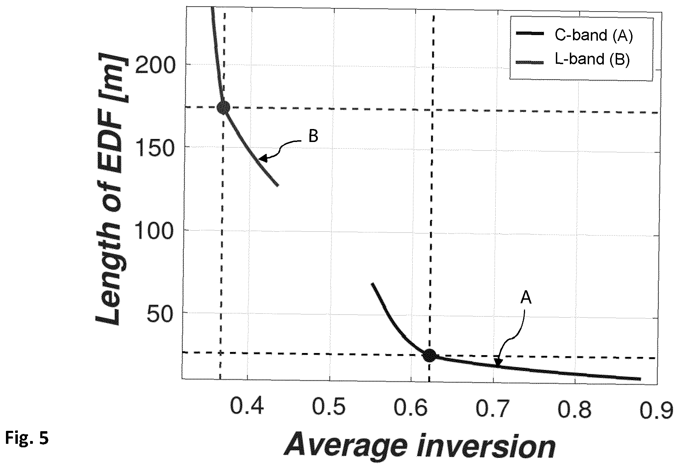

Fig. 5 shows a diagram including simulated curves of required length of an EDF vs. average inversion of this amplifier. Using the average inversion required for a maximum power conversion efficiency from the curves in Fig. 4, the ideal total length of the EDF for amplifying either the whole C-band or the whole L-band can be determined from the curves shown in Fig. 5. The ideal length of the EDF for amplifying the L-band (curve B) is much longer than the ideal length of the EDF for amplifying the C-band (curve A). In the example shown in Fig. 5, i.e. for a gain of 25 dB and a standard EDF, the ideal length for the C-band is 14 m at an average inversion of 62.2% and the ideal total length for the L-band is approximately 170 m at an average inversion of 36.7%.

This explanation is also true for cascades of EDFs as used in the amplifier structure according to Fig. 2, i.e. the effective C-band amplification fiber formed by the common amplification fiber and the C-band amplification fiber comprised by the optical amplifier 206 and the effective L-band amplification fiber formed by the common amplification fiber and the C-band amplification fiber comprised by the optical amplifier 206, respectively.

As mentioned above, in order to design an amplifier having the general structure according to Fig. 2, it is advantageous to determine the length of the common amplification fiber in such a way that it comprises a major portion of the effective length of the effective C-band amplification fiber (which determines the maximum length of the common amplification fiber in an efficiency-optimized design). The length of the common optical amplification fiber is chosen to be greater than or equal to preferably 80%, more preferably 85%, even more preferably 90% or 95% of the effective length of the effective C-band fiber. In general, the length of the common fiber is chosen as long as possible, but a little shorter than the effective length of the effective C-band fiber so that it is possible to adjust the gain for the C-band in the second stage in such a way that the desired total (spectral) gain is achieved depending on further parameters, e.g. the optical signal power (e.g. the cumulated signal power of a given number of optical channel signals of a WDM signal to be amplified, etc.).

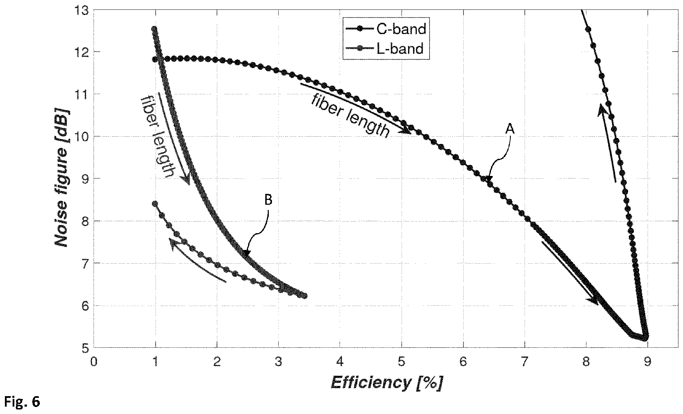

Fig. 6 shows, again for a standard (single-stage) optical amplifier (as in case of Figs. 4 and 5), a diagram including a parametric representation of curves for the noise figure vs. optical power conversion efficiency, wherein curve A illustrates the dependency of the maximum (wavelength-dependent) noise figure on the efficiency when amplifying an optical signal within the C-band and curve B illustrates a corresponding dependency when amplifying an optical signal within the L-band. The direction of an increasing fiber length is indicated by arrows in both curves. As apparent from Fig. 6, the average inversion yielding maximum power conversion efficiency also leads to optimum noise performance (i.e. to a minimum (maximum) value of the wavelength-dependent noise figure) within the optical band of interest.

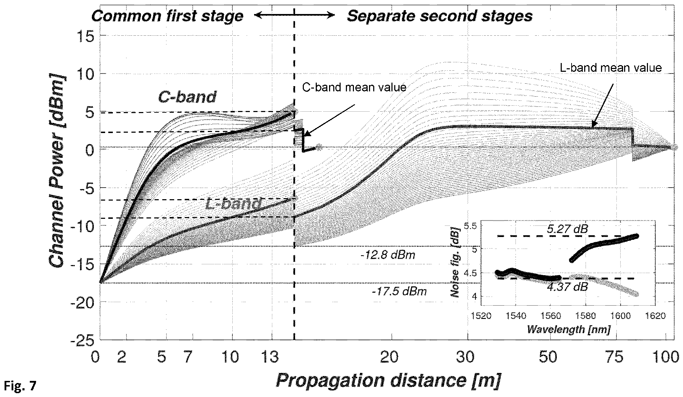

Fig. 7 shows a power profile of an efficiency-optimized state of the art two-stage broadband optical amplifier having the structure according to Fig. 2. The y-axis shows the optical channel power in dBm of a plurality of optical channel signals of an optical WDM signal to be amplified. The x-axis shows the propagation distance of the channel signals within the effective length in meters of the effective C-band and L-band amplification fiber, respectively. This simulation has been carried out for a predetermined gain of 17.5 dB. Assuming an input power of -17.5 dBm for all optical channel signals to be amplified leads to a total target output power of 18 dBm for all optical channels, wherein each optical channel signal has an output power of 0 dBm).

During propagation along the effective C-band and L-band amplification fiber, respectively, the optical channel signals in the C-band and the L-band experience a wavelength-dependent gain, wherein the channel signals at longer wavelengths experience a smaller gain than the channel signals at shorter wavelengths. If the channel power (i.e. the optical power of an optical channel signal) is increased too much, it decreases while the channel signals propagate further. This behavior is caused by nonlinear effects which lead to coupling of optical power from optical channel signals at high power to optical channel signals at higher wavelengths.

The course of the mean value of optical power included in the C-band optical channel signals and the L-band optical channel signals, respectively, is highlighted as a thick black line. The C-band mean value reveals an optical power of approximately 5 dBm at the end of the common amplification fiber, i.e. at the end of the first stage, wherein the L-band mean value is as low as approximately -6 dBm. Splitting the optical channel signals (i.e. separating the optical C-band and the optical L-band) introduces an attenuation of approximately 3 dB. Accordingly, the C-band mean value is approximately 2 dBm and the L-band mean value is approximately -9 dBm at the beginning of the second stage. Since all C-band channel signals have an optical power above the target output power at the beginning of the second stage (after the separation of the C- and L-band), if at all only little amplification is required in the second stage. The amplification required more or less merely compensates the minimum spectral attenuation of the GFF, which, according to Fig. 7, is provided between a first and a second part of the C-band amplification fiber. As the spectral (i.e. wavelength-dependent) attenuation of the GFF is modelled in such a way that the wavelength-dependent gain is compensated (as described above with reference to Fig. 3), the optical power of each C-band channel signal is 0 dBm at the end of the effective C-band amplification fiber.

It shall be mentioned at this point that a further (almost wavelength-independent) insertion loss of the optical band combiner 204, which combines the optical C-band and the optical L-band channel signals to an amplified optical WDM output signal Sₒᵤₜ, has been neglected in the simulation of the power profile according to Fig. 7. Such an additional insertion loss might also amount to 1 to 3 dB.

In general, the power profile of the L-band optical channel signals is similar to the power profile of the C-band optical channel signals. However, due to a much lower gain that these optical channel signals encounter when propagating through the common amplification fiber of the first stage (i.e. a first part of the effective length of the effective L-band amplification fiber), these channels are not significantly affected by gain saturation so that the optical power of the L-band channel signals continually increases within the common amplification fiber. The L-band channel signal at the longest wavelength, which experiences the lowest amplification, has an optical power of approximately -12.8 dBm at the beginning of the second stage (after the optical band splitter 202). As illustrated by the simulation according to Fig. 7, the effective length of the L-band amplification fiber must be considerably longer than the effective length of the C-band amplification fiber in order to obtain the target channel power of 0 dBm at the end of the second stage. In the example shown in Fig. 7, the length of the effective L-band amplification fiber is more than 100 m. As apparent from this power profile, the (actual not effective) L-band amplification fiber is also divided into two parts and GFF is provided between the two parts, wherein the first part of the L-band amplification fiber has a considerably greater length than the second part. The reason therefore is to obtain a sufficiently high (minimum) gain or optical power of the L-band optical channel signals before a further insertion loss created by the GFF is introduced in order to avoid an unnecessarily high impact on the noise figure.

The insert (at the right bottom corner) of Fig. 7 illustrates, for the corresponding two-stage optical amplifier, the wavelength-dependent course of the noise figure. The gray curve represents the noise figure of the first stage and the black curve represents the noise figure of the first and second stage (wherein the second stage comprises the insertion loss introduced by the optical band splitter 202). As can be seen from the plot, there is a gap between the L-band wavelengths and the C-band wavelengths. As already explained above, this gap assures that the optical band splitter 202 (i.e. the C/L-band splitter), which reveals a finite filter slope of the filter functions between the common port and each of the output ports, does not introduce an unacceptably high insertion loss for optical channel signals having a wavelength close to filter edge (i.e. the border between the two bands to be separated).

As apparent from the insert of Fig. 7, the maximum value of the noise figure of the optical amplifier comprising both stages is 5.27 dB, wherein this value is reached by an optical channel signal having the longest wavelength within the L-band. In general, the noise figure for all L-band optical channel signals is considerably higher than the maximum noise figure for the C-band optical channel signals.

Thus, if an existing optical transmission link comprising one or more optical amplifiers which is configured to transmit optical signals lying in the optical C-band is to be upgraded with respect to the bandwidth, for example to an extended bandwidth that also comprises the whole L-band, the maximum wavelength-dependent noise figure of a known two-stage optical amplifier according to the structure shown in Fig. 2, which reveals the usual efficiency-optimized design, might not be sufficiently low in order to guarantee the desired transmission quality (e.g. the maximum admissible bit error rate).

Starting from the prior art of a two-stage broadband optical amplifier described above, which reveals an efficiency-optimized design, the present invention provides an improved design that generally has the same structure (as shown in Fig. 2), but reveals an improved noise figure, especially in the higher wavelength range of the optical L-band. The inventor has recognized that leaving the efficiency-optimized design may lead to an improved noise behavior in the L-band.

In the following, a more detailed appropriate structure of a two-stage optical amplifier 300 is described with reference to Fig. 8 in order to explain various embodiments of the invention.

Fig. 8 shows a schematic block diagram of a two-stage broadband optical amplifier realized as a two-stage broadband erbium-doped fiber amplifier (EDFA). The function of a two-stage broadband EDFA is considered to be common knowledge of a skilled person and will therefore only briefly be explained here. It shall be noted that, even if the invention is explained in the following with reference to an embodiment that uses EDFs as amplification fibers, any optical amplification fiber that is appropriate to optically amplify light waves within the desired optical band may be used. It is also possible to provide more than two branches in the second stage and appropriate optical band splitters and band combiners in order to separate the broad band into a respective number of optical (sub-) bands each of which covers a predetermined wavelength range that does not overlap with neighboring wavelength ranges of neighboring optical (sub-) bands.

The amplifier 300 comprises a first stage (stage 1) and a second stage (stage 2), wherein the second stage comprises a first and a second branch, each branch being configured to amplify a separate optical band. The second stage further comprises a passive optical band splitter 302 and a passive optical band combiner 304. A first branch of the second stage comprises an optical amplifier 306, which is configured to amplify an optical signal S_{C-band,a1} lying within the optical C-band, i.e comprising spectral components (e.g optical channel signals) lying within the optical C-band. A second branch of the second stage comprises an optical amplifier 308, which is configured to amplify an optical signal S_{L-band,a1} lying within the optical L-band, i.e comprising spectral components (e.g optical channel signals) lying within the optical L-band, only.

Thus, the general structure of the amplifier 300 shown in Fig. 8 corresponds to the structure of the amplifier 200 according to Fig. 2.

The first stage comprises a common optical amplifier 310. The optical amplifier 310 comprises, within an optical path between an input port and an output port of the first stage (seen in the direction of an optical input signal to be amplified, in the figure from left to right), an optical tap coupler 312, a wavelength-dependent optical 2x1 coupler 314, a first part of a amplification fiber 318 (realized as an EDF), an optionally provided a passive optical wavelength-dependent filter 320, a second part of the optical amplification fiber 318, a wavelength-dependent optical 1x2 coupler 315 and a further optical tap coupler 313. The optical amplifier 310 further comprises a first optical detector device 311 comprising a photodiode for detecting an optical power of an optical signal that is received by the optical detector device 311. The optical detector device 311 is coupled to a tap branch of the optical tap coupler 312. Likewise, a further optical detector device 305 comprised by the optical amplifier 310 is coupled to a tap branch of the optical tap coupler 313. The optical detector device 305 is configured to detect an optical power of an optical signal received, which is tapped off from the optical path by the optical tap coupler 313. The common optical amplifier 310 further comprises an optical pump source 316, which may be realized as a pump laser, which is coupled to one of the combining ports of the wavelength-dependent 2x1 coupler 314.

The output port of the optical amplifier 310 is connected to a common port of the optical band splitter 302. Each of the two output ports of the optical band splitter 302 is connected to the first and second branch of the second stage of the optical amplifier 300. The first and second branch comprises the respective C-band and L-band amplifier 306, 308, wherein an input port of the C-band amplifier 306 is connected to one of the bandoutput ports of the band splitter 302 and an input port of the L-band amplifier 308 is connected to the other output port of the optical band splitter 302. Likewise, an output port of the optical amplifier 306 is optically connected to a first input port of the optical band combiner 304 and an output port of the optical amplifier 308 is optically connected to a second input port of the optical band combiner 304. The common port of the optical band combiner 304 defines the output port of the amplifier 300 at which an optical output signal Sₒᵤₜ is output.

The general structure of the optical amplifiers 306 and 308 is similar to the structure of the common optical amplifier 310. Thus, identical components are designated by identical reference numbers.

The optical amplifier 306 comprises, within an optical path between the input port and the output port of (seen in the downstream direction of an optical input signal to be amplified), an optical tap coupler 312, a wavelength-dependent optical 2x1 coupler 314, a first part of an optical C-band amplification fiber 330 (realized as an EDF), and optionally provided a passive optical wavelength-dependent filter 320, a second part of the optical amplification fiber 330, a wavelength-dependent optical 1x2 coupler 315 and a further optical tap coupler 313. The optical amplifier 310 further comprises a first optical detector device 311 comprising a photodiode for detecting an optical power of an optical signal that is received by the optical detector device 311. The optical detector device 311 is coupled to a tap branch of the optical tap coupler 312. Likewise, a further optical detector device 305 comprised by the optical amplifier 310 is coupled to a tap branch of the optical tap coupler 313. The optical detector device 305 is configured to detect an optical power of an optical signal received, which is tapped off from the optical path by the optical tap coupler 313. The optical amplifier 306 further comprises an optical pump source 316, which may be realized as a pump laser, which is coupled to one of the combining ports of the wavelength-dependent 2x1 coupler 314.

In addition, the C-band amplifier 306 comprises a passive optical gain shaping filter (GSF) 324, which may be realized as a gain flattening filter (GFF). Further, the C-band optical amplifier may optionally comprise (as explained below) one or more optical attenuators 322, which are configured to introduce a predefined essentially wavelength-independent insertion loss. As apparent from Fig. 8, the optical attenuators 322 may be provided between the wavelength-dependent 2x1 coupler 314 and the first part of the C-band amplification fiber 330 and/or between the GSF 324 and the second part of the C-band amplification fiber 330 and/or between the second part of the C-band amplification fiber and the wavelength-dependent 1x2 coupler 315. Of course, an additional attenuator 322 may also (only or additionally) be provided between the first part of the C-band amplification fiber 330 and the GSF 324.

It is worth recalling here that the order of passive components in a linear series of components can be freely changed without affecting functionality in view of signals propagating along this series. Thus, the first attenuator 322 placed after the 2x1 coupler 314 can also be placed in front of this coupler or even in front of the tap coupler 312. Such an arrangement is even preferred since it provides better pumping efficiency. Furthermore, the attenuation provided by the optical attenuator 322 placed after the GSF 324 can also be provided by this GSF by adding an offset to its attenuation profile.

The structure of the L-band amplifier 308, in the embodiment shown in Fig. 8, is identical with the structure of the C-band amplifier 306, wherein the C-band amplification fiber 330 is replaced by an L-band amplification fiber 332.

The optical amplifier 300 further comprises a control device 303 which is configured to create control signals for all optical pump sources comprised by the optical amplifier 302 and to feed such control signals to the respective optical pump sources and to receive and process signals created by the optical detector devices 305 and 311. The connection between the control device 303 and the respective components is indicated by double arrows in case of a bidirectional communication (as is the case between the optical pump sources 316 and the control device 303) and by simple arrows in case of a unidirectional communication (as might be used between the optical detectors 305, 311 and the control device 303).

In the following, the operation of the optical amplifier 300 according to Fig. 8 is explained in more detail:
An optical input (transmission) signal Sᵢₙ, e.g. an optical WDM signal to be amplified comprising a predetermined number of optical channel signals lying within the broad band the amplifier (EDFA) 300 is designed for, is fed to an input port of the first stage of the EDFA 300. A small portion of the optical power of the input signal Sᵢₙ, which is tapped off by the tap coupler 312 (i.e. its absolute value or a (relative) value corresponding thereto), is measured by a first optical detector device 311. The information about the optical power of the optical input signal Sᵢₙ measured by the detector device 311 is fed to the control device 303. Likewise, the optical tap coupler 313 and the detector device 305 are configured to feed information about the optical power of the amplified input signal Sₐ₁, i.e. the amplified signal that is output by the first stage, to the control device 303. This information can be used by the control device 303 to adjust and control the pump power of the optical pump source 316 comprised by the first stage.

On its way through the wavelength-dependent 2x1 coupler, the optical input signal Sᵢₙ is combined with the pump light from the pump source 316. The optical input signal Sᵢₙ and the pump light reveal non-overlapping optical spectra. The combined light is guided into an amplification section realized by common amplification fiber 318. The optical pump light created by the pump laser excites corresponding ions of the common amplification fiber 318 (e.g. the erbium ions of an EDF) to a higher-energy state. The photons of the optical input signal Sᵢₙ at wavelengths differing from the wavelength of the pump light interact with the excited state of the excited atoms, wherein these ions are caused to drop from the excited state to a lower-energy state. In this way, additional photons are created having exactly the same wavelength, phase and direction as the photons of the optical input signal Sᵢₙ to be amplified. The whole additional signal power is guided in the same fiber mode as the optical input signal Sᵢₙ.

The functionality of the wavelength-dependent filter 320 will be discussed below in connection with the more detailed explanation of a respective embodiment of the invention.

Optionally, the remaining portion of the pump light that has not been used in order to create the stimulated light is extracted from the optical path through the optical amplifier 310 by the wavelength-dependent coupler 315, which is configured to transmit further to the optical path only the spectral components of the amplified optical input signal Sₐ₁ and to direct all other spectral components (especially the pump light components) to a splitting port which is not connected at all or which is connected to any device that dissipates the remaining portion of the pump light.

The optical input signal Sₐ₁ that has been amplified within the first stage by the optical amplifier 310 is fed to the common port of the optical band splitter 302, which is configured to separate the spectral components of this signal lying in the C-band and the L-band, respectively. The optical signal S_{C-band,a1} that merely comprises components within the C-band (e.g. optical channel signals that lie within the optical C-band) is output to the upper branch of the second stage of the amplifier 300, i.e. to the C-band amplifier 306. Likewise, the optical signal S_{L-band,a1} that merely comprises components within the L-band (e.g. optical channel signals that lie within the optical L-band) is output to the lower branch of the second stage of the amplifier 300, i.e. to the L-band amplifier 308.

The C-band amplifier 306 and the L-band amplifier 308 function essentially in the same way as the common amplifier 310 described above. However, the C- and L-band amplifiers additionally comprise a respectively designed GSF (or GFF) 324, the functionality of which has already been described in general in connection with Fig. 3. Of course, the GSF 324 in the C-band amplifier is configured to appropriately shape the spectrum of the C-band, and the GSF 324 in the L-band amplifier is configured to appropriately shape the spectrum of the L-band. As apparent from Fig. 8, the GSFs 324 may be provided between the first and second part of the respective amplification fiber 330, 332. However, the GSFs may be positioned anywhere within the respective branch of the second stage. It is nevertheless advantageous to provide the GSF 324 at a position within the optical path of the optical amplifier 306, 308 at which a sufficiently high power level (or gain) is already achieved in order to reduce the negative influence of the wavelength-dependent insertion loss introduced by the GSF 324 on the noise figure (see above).

Of course, the information concerning the signal power of the optical signals S_{C-band,a1}, S_{L-band,a1}, S_{C-band,a2} and S_{L-band,a1} may be used in order to control the optical pump power supplied by the optical pump sources 316 comprised by the second stage (and, as the case may be, also the optical pump power supplied by the optical pump source 316 comprised by the first stage) of the optical amplifier 300.

According to various embodiments of the invention, different measures can be taken in order to decrease the noise figure of the optical amplifier 300 as compared to an efficiency-optimized design of an amplifier having essentially the same structure. All these measures lead to an increased length of the common amplification fiber 318.

A first measure may be to introduce a wavelength-dependent additional attenuation in stage 1 by means of an appropriately designed wavelength-dependent optical filter 320. Such an optical filter may be realized as a fused fiber device. As described above, the gain provided by an optical amplification fiber, e.g. an EDF, is wavelength-dependent, which leads to a higher gain in one of the optical bands, e.g. the C-band in case of an EDF. Introducing an additional attenuation in this band (e.g. the C-band) can be realized by such a wavelength-dependent optical filter 320. Such optical filters, e.g. fused fiber devices, offer the advantage of low insertion loss in the wavelength range that shall not be attenuated, e.g. the L-band. Of course, the wavelength-dependent optical filter 320 may be positioned anywhere within the optical path of the common amplifier 310. However, it is advantageous to choose its position in such a way that all spectral components of the optical input signal Sᵢₙ have already experienced a sufficient gain so that the influence of the additional attenuation on the noise figure is low, e.g. in such a way that its contribution to the noise figure is smaller than a predetermined threshold.

In this way, the length of the common amplification fiber 318 can be increased as compared to a reference broadband optical amplifier of an efficiency-optimized design having an identical structure and including, apart from the length of the common amplification fiber and the lengths of the first and second amplification fiber, identical components, apart from the wavelength-dependent optical filter 320. In this way, the maximum value of the wavelength-dependent noise figure (which is reached at the longer wavelength range of the L-band) can be reduced. However, the power efficiency of the amplifier is of course deteriorated by this measure.

A further measure according to the invention to improve the noise properties of a two-stage optical amplifier having the structure according to Figs. 2 and 8 is to introduce an additional attenuation in the C-band path in stage 2 of the amplifier 300 as shown in Fig. 8 by providing optical attenuators 322 in the optical amplifier 306. Of course, "additional" in this context again means, as compared to an efficiency-optimized design, an amplifier having the same structure and components (apart from the optical attenuators 322 and/or the changed spectral attenuation of the GSF 324). These optical attenuators may be configured to introduce an essentially wavelength-independent attenuation into the respective optical path. It is also possible to design the GSF 324 in the C-band amplifier 306 in such a way that the additional attenuation is included (e.g. as a minimum wavelength-independent attenuation) into the filter property.

Also in this way, it is possible to increase the length of the common amplification fiber and, as a result, to increase the gain that is experienced by the spectral components of the optical input signal Sᵢₙ lying in the L-band (especially the longer wavelength range of the L-band).

A third measure to obtain this result is to decrease the optical pump power of the common optical pump laser 316 in stage 1. This decrease may be caused by the control device 303 and a corresponding control signal that is fed to the optical pump source 316 of the common optical amplifier 310. This decrease in the optical pump power also makes it possible to increase the length of the common amplification fiber 318, which in turn leads to an increased gain of the spectral components in the L-band, whereas a still sufficiently high gain is maintained for the spectral components in the optical C-band.

A fourth measure is to increase the length of EDF in the C-band branch as compared with the energy-efficient design without or with adding additional components. Some further improvement may be achieved by reducing the length of the EDF in the L-band branch.

All these measures lead to the advantage of creating an increased gain for the spectral components which, in an efficiency-optimized design, are amplified to such a low extent in the first stage that the insertion loss of the optical band splitter 302 leads to an unacceptably high noise figure for these spectral components. Thus, all these measures lead to a reduced maximum value of the wavelength-dependent noise figure in the corresponding wavelength range. Each of these measures may be applied per se or in any combination.

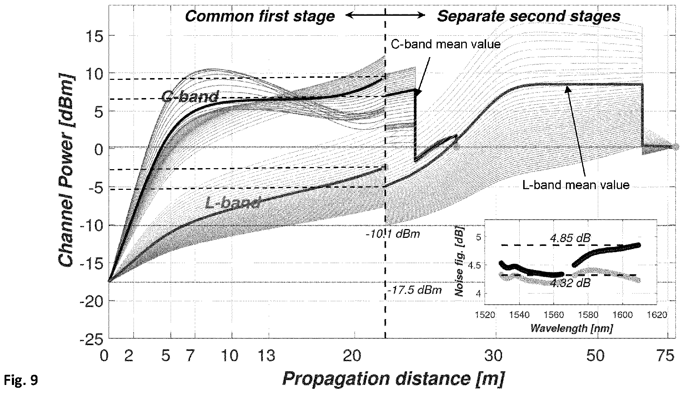

Fig. 9 shows an exemplary power profile of a two-stage broadband optical amplifier 300 shown in Fig. 8 that comprises at least one of the measures described above, wherein this power profile has been obtained using simulation under the same basic assumptions as the power profile in Fig. 7.

As apparent from Fig. 9, the length of the common amplification fiber is considerably increased up to approximately 22.5 m as compared to the simulation of a correspondingly efficiency-optimized design shown in Fig. 7 with a length of 14.7 m. Accordingly, the gain experienced by the spectral components of the optical input signal Sᵢₙ in the L-band is increased. The minimum signal power in the L-band is increased from -12.8 dBm (see Fig. 7) to -10.1 dBm. Thus, the impact of the insertion loss of the band splitter 302 on the noise figure is reduced. The maximum value of the noise figure (in the L-band) is reduced from 5.27 dB to 4.85 dB (see the insert in Fig. 9 showing the wavelength-dependent course of the noise figure in the first and second stage, respectively).

The mean optical power of the C-band reaches, due to the increased length of the common amplification fiber, a value of approximately 9 dBm at the end of the first stage as compared to a value of 5 dBm in the efficiency-optimized design. This increase in the optical power of the spectral components in the C-band is compensated by an increased attenuation introduced in the C-band amplifier 306 of the second stage, which is apparent from Fig. 9, for example, from the increased step between the first and second part of the C-band amplification fiber 330 (which extends from approximately 22 m to approximately 27 m).

As apparent from Fig. 9, the amplification of all L-band spectral components (i.e. optical channel signals) to the target output power requires an L-band amplification fiber 332 of more than 75 m, which is shorter than the length of the L-band amplification fiber in the efficiency-optimized design of Fig. 7. This is a result of an increased pump power in the L-band.

Even if the reduced noise figure of the EDFA setup 300 (4.85 dB instead of 5.27 dB) appears to be small, this difference allows for a maximum transmission distance that is approximately 10% larger than in case of using a broadband optical amplifier 300 having an efficiency-optimized design.

### List of Reference Signs

- 100: single-stage broadband optical amplifier
- 102: optical band splitter
- 104: optical band combiner
- 106: C-band amplifier
- 108: L-band amplifier
- 200: two-stage broadband optical amplifier
- 202: optical band splitter
- 204: optical band combiner
- 206: C-band amplifier
- 208: L-band amplifier
- 210: common amplifier
- 300: two-stage broadband optical amplifier
- 302: optical band splitter
- 303: control device
- 304: optical band combiner
- 305: second optical detector device
- 306: C-band amplifier
- 308: L-band amplifier
- 310: common amplifier
- 311: first optical detector device
- 312: first tap coupler
- 313: second tap coupler
- 314: first wavelength-selective coupler
- 315: second wavelength-selective coupler
- 316: optical pump source
- 318: common amplification fiber
- 320: wavelength-dependent optical filter
- 322: additional attenuation
- 324: gain shaping filter
- 330: C-band amplification fiber
- 332: L-band amplification fiber
- Sᵢ.: optical input signal
- Sₒᵤₜ: optical output signal
- S_{C-band}: C-band signal portion
- S_{C-band,a}: amplified C-band signal portion
- S_{L-band}: L-band signal portion
- S_{L-band,a}: amplified L-band signal portion

- Sₐ₁: amplified optical input signal (first stage)
- S_{C-band,a1}: amplified C-band signal portion (first stage)
- S_{C-band,a2}: amplified C-band signal portion (second stage)
- S_{L-band,a1}: ^{,}amplified L-band signal portion (first stage)
- S_{L-band,a2}: amplified L-band signal portion (second stage)

## Claims

1. A broadband optical amplifier (300)
(a) configured to optically amplify an optical signal which is received at an amplifier input port and which comprises first spectral components lying within a predetermined first optical band covering a first wavelength range and second spectral components lying within a predetermined second optical band covering a second wavelength range that does not overlap with the first wavelength range, and to output the amplified optical signal to an amplifier output port, wherein the broadband optical amplifier (300) is configured to provide a predetermined total optical gain,
(b) the broadband optical amplifier (300) comprising a first stage and a second stage,
(c) wherein the first stage comprises a common optical amplification fiber and a common optical pump source configured to feed an optical pump power into the common optical amplification fiber,
(d) the first stage being configured to amplify all spectral components of the optical signal and to feed an amplified optical signal to the second stage, wherein a wavelength-dependent gain of the common optical amplification fiber for the first spectral components is higher than for the second spectral components,
(e) the second stage comprising a first and a second branch and being configured to feed the amplified first spectral components of the amplified optical signal to the first branch, to feed the amplified second spectral components of the amplified optical signal to the second branch, to further amplify the amplified first and second spectral components within the first and second branch, and to combine and output the further amplified first and second spectral components as amplified optical signal at the amplifier output port,
(f) wherein the first branch of the second stage comprises a first optical amplification fiber and a first optical pump source configured to feed an optical pump power into the first optical amplification fiber and a first optical gain shaping filter and wherein the second branch of the second stage comprises a second optical amplification fiber and a second optical pump source configured to feed an optical pump power into the second optical amplification fiber and a second optical gain shaping filter,
(g) wherein the optical pump power of the common optical pump source, the optical pump power of the first and second optical pump source, the spectral attenuation characteristic of the first and second gain shaping filter and the length of the common amplification fiber and the length of the first and second amplification fiber are determined in such a way that a predetermined spectral course of the gain is achieved,
**characterized in**
(h) that the length of the common amplification fiber is greater than the length of the common amplification fiber of a reference broadband optical amplifier (200) of an efficiency-optimized design, having an identical structure and including, apart from the length of the common amplification fiber and the lengths of the first and second amplification fiber, identical components, wherein this increase in length of the common amplification fiber is determined in such a way that the broadband optical amplifier (300) reveals a lower maximum value of a wavelength-dependent noise figure within the first and second optical band than the comparable broadband optical amplifier (200),
(i) wherein such an increase in the length of the common amplification fiber and simultaneous reduction of the minimum value of the wavelength-dependent noise figure as compared to the minimum value of the wavelength-dependent noise figure of the efficiency-optimized design is achieved by one or more of the following design features:
(i) decreasing the optical pump power of the common optical pump source;
(ii) adding additional attenuation within the first optical band to the first branch of the second stage;
(iii) adding additional attenuation (322) within the first optical band to the first stage;
(iv) increasing the total length of the common optical amplification fiber and the first optical amplification fiber.

2. A broadband optical amplifier according to claim 1, wherein an additional attenuation component is provided within the first common stage, which is configured to attenuate the first spectral components to a higher extent than the second spectral components.

3. A broadband optical amplifier according to claim 2, wherein the additional attenuation component is provided between a first part and a second part of the common optical amplification fiber or downstream of the common optical amplification fiber.

4. A broadband optical amplifier according to one of claims 1 to 3, wherein an additional attenuation is added to the first branch of the second stage, which is preferably essentially constant within the first band.

5. A broadband optical amplifier according to claim 4, wherein the additional attenuation is created by an attenuation component which is provided between a first part and a second part of the first optical amplification fiber and/or upstream and/or downstream of the common optical amplification fiber.

6. A broadband optical amplifier according to claim 4 or 5, wherein the gain shaping filter is provided between a first part and a second part of the first optical amplification fiber or upstream or downstream of the common optical amplification fiber and wherein at least a portion of the additional attenuation is included within the first gain shaping filter.

7. A broadband optical amplifier according to any of the preceding claims, wherein the ratio of the total lengths of the amplification fibers for the second band and first band is reduced by 20%, preferably by 40%, more preferably by 50% and even more preferably by 60% as compared with the efficiency-optimized design.

8. A method of manufacturing a broadband optical amplifier according to claim 1, the method comprising the steps of:
(a) creating a mathematical model of the broadband optical amplifier providing a predetermined total gain, which is configured to determine the wavelength-dependent noise figure of the broadband optical amplifier in dependency of the optical properties of the components of the first and second stage of the broadband optical amplifier and the optical pump power that is fed to the common optical amplification fiber, the optical pump power that is fed to the first optical amplification fiber and the optical pump power that is fed to the second optical amplification fiber, wherein the optical pump powers are determined in such a way that a predetermined value of a total optical gain of the broadband optical amplifier is achieved;
(b) determining the efficiency-optimized design of the reference broadband optical amplifier using the mathematical model;
(c) determining a maximum value of the wavelength-dependent noise figure of the reference broadband optical amplifier as a reference value;
(d) determining a modified design which reveals essentially the same total gain as the efficiency-optimized design and which has, as compared to the efficiency-optimized design of the reference broadband optical amplifier, an increased length of the common amplification fiber and at least one of the following design features:
(i) a predetermined decreased value of the optical pump power of the common optical pump source;
(ii) an additional attenuation added within the first optical band to the first branch of the second stage;
(iii) an additional attenuation added within the first optical band to the first stage;
(iv) an increased total length of the common optical amplification fiber and the first optical amplification fiber;
(e) determining a maximum value of the wavelength-dependent noise figure of the modified design as a design value;
(f) using the modified design for setting up a corresponding physical broadband optical amplifier if the design value is lower than the reference value.

9. A method according to claim 8, wherein at least one of the features of the group consisting of a predetermined decreased value of the optical pump power of the common optical pump source, an additional attenuation added within the first optical band to the first branch of the second stage, an additional attenuation added within the first optical band to the first stage and an increased total length of the common optical amplification fiber and the first optical amplification fiber is specified and the corresponding increased length of the common amplification fiber is determined by using the mathematical model.

10. A method according to one of claims 8 to 9, wherein the steps (d) and (e) of claim 8 are repeated until the respective design value is equal to or lower than a predetermined threshold value.

11. A method according to one of claims 8 to 10, wherein the modified design that is used to set up a corresponding physical broadband optical amplifier provides a power conversion efficiency equal to or higher than a predetermined minimum value.

12. A method according to one of claims 8 to 11, wherein the first and/or second gain shaping filter is realized as a gain flattening filter.

## Patentansprüche

1. Breitbandiger optischer Verstärker (300),
(a) der dazu eingerichtet ist, ein optisches Signal optisch zu verstärken, das an einem Verstärkereingangsanschluss empfangen wird und das erste Spektralkomponenten umfasst, die innerhalb eines vorbestimmten ersten optischen Bandes liegen, das einen ersten Wellenlängenbereich abdeckt, und das zweite Spektralkomponenten umfasst, die innerhalb eines vorbestimmten zweiten optischen Bandes liegen, das einen zweiten Wellenlängenbereich abdeckt, der sich nicht mit dem ersten Wellenlängenbereich überlappt, und der dazu eingerichtet ist das verstärkte optische Signal an einen Verstärkerausgangsanschluss auszugeben, wobei der breitbandige optische Verstärker (300) dazu eingerichtet ist, eine vorbestimmte optische Gesamtverstärkung bereitzustellen,
(b) wobei der breitbandige optische Verstärker (300) eine erste Stufe und eine zweite Stufe umfasst,
(c) wobei die erste Stufe eine gemeinsame optische Verstärkungsfaser und eine gemeinsame optische Pumpquelle umfasst, die dazu eingerichtet ist, der gemeinsamen optischen Verstärkungsfaser eine optische Pumpleistung zuzuführen,
(d) wobei die erste Stufe dazu eingerichtet ist, alle Spektralkomponenten des optischen Signals zu verstärken und der zweiten Stufe ein verstärktes optisches Signal zuzuführen, wobei eine wellenlängenabhängige Verstärkung der gemeinsamen optischen Verstärkungsfaser für die ersten Spektralkomponenten höher ist als für die zweiten Spektralkomponenten,
(e) wobei die zweite Stufe einen ersten und einen zweiten Zweig umfasst und dazu eingerichtet ist, die verstärkten ersten Spektralkomponenten des verstärkten optischen Signals dem ersten Zweig zuzuführen, die verstärkten zweiten Spektralkomponenten des verstärkten optischen Signals dem zweiten Zweig zuzuführen, die verstärkten ersten und zweiten Spektralkomponenten innerhalb des ersten und zweiten Zweigs weiter zu verstärken und die weiter verstärkten ersten und zweiten Spektralkomponenten zusammenzuführen und als verstärktes optisches Signal an dem Verstärkerausgangsanschluss auszugeben,
(f) wobei der erste Zweig der zweiten Stufe eine erste optische Verstärkungsfaser, eine erste optische Pumpquelle, die dazu eingerichtet ist, der ersten optischen Verstärkungsfaser eine optische Pumpleistung zuzuführen, und ein erstes optisches Gain-Shaping-Filter umfasst und wobei der zweite Zweig der zweiten Stufe eine zweite optische Verstärkungsfaser, eine zweite optische Pumpquelle, die dazu eingerichtet ist, der zweiten optischen Verstärkungsfaser eine optische Pumpleistung zuzuführen, und ein zweites optisches Gain-Shaping-Filter umfasst,
(g) wobei die optische Pumpleistung der gemeinsamen optischen Pumpquelle, die optische Pumpleistung der ersten und zweiten optischen Pumpquelle, die spektrale Dämpfungscharakteristik des ersten und zweiten Gain-Shaping-Filters und die Länge der gemeinsamen Verstärkungsfaser und die Länge der ersten und zweiten Verstärkungsfaser derart bestimmt sind, dass ein vorbestimmter spektraler Verlauf der Verstärkung erreicht wird,
**dadurch gekennzeichnet**,
(h) dass die Länge der gemeinsamen Verstärkungsfaser größer ist als die Länge der gemeinsamen Verstärkungsfaser eines breitbandigen optischen Referenzverstärkers (200) mit einer effizienzoptimierten Auslegung, der einen identischen Aufbau aufweist und, abgesehen von der Länge der gemeinsamen Verstärkungsfaser und den Längen der ersten und zweiten Verstärkungsfaser, identische Komponenten enthält, wobei diese Vergrößerung der Länge der gemeinsamen Verstärkungsfaser derart bestimmt ist, dass der breitbandige optische Verstärker (300) innerhalb des ersten und zweiten optischen Bandes einen niedrigeren Maximalwert einer wellenlängenabhängigen Rauschzahl aufweist als der vergleichbare breitbandige optische Verstärker (200),
(i) wobei eine solche Vergrößerung der Länge der gemeinsamen Verstärkungsfaser und eine gleichzeitige Verringerung des Minimalwerts der wellenlängenabhängigen Rauschzahl im Vergleich zu dem Minimalwert der wellenlängenabhängigen Rauschzahl der effizienzoptimierten Auslegung durch eines oder mehrere der folgenden Auslegungsmerkmale erreicht werden:
(i) Verringern der optischen Pumpleistung der gemeinsamen optischen Pumpquelle;
(ii) Hinzufügen zusätzlicher Dämpfung innerhalb des ersten optischen Bandes zu dem ersten Zweig der zweiten Stufe;
(iii) Hinzufügen zusätzlicher Dämpfung (322) innerhalb des ersten optischen Bandes zu der ersten Stufe;
(iv) Vergrößern der Gesamtlänge der gemeinsamen optischen Verstärkungsfaser und der ersten optischen Verstärkungsfaser.

2. Breitbandiger optischer Verstärker nach Anspruch 1, wobei innerhalb der ersten gemeinsamen Stufe eine zusätzliche Dämpfungskomponente vorgesehen ist, die dazu eingerichtet ist, die ersten Spektralkomponenten in höherem Maße zu dämpfen als die zweiten Spektralkomponenten.

3. Breitbandiger optischer Verstärker nach Anspruch 2, wobei die zusätzliche Dämpfungskomponente zwischen einem ersten Teil und einem zweiten Teil der gemeinsamen optischen Verstärkungsfaser oder stromabwärts der gemeinsamen optischen Verstärkungsfaser vorgesehen ist.

4. Breitbandiger optischer Verstärker nach einem der Ansprüche 1 bis 3, wobei eine zusätzliche Dämpfung zu dem ersten Zweig der zweiten Stufe hinzugefügt ist, die vorzugsweise innerhalb des ersten Bandes im Wesentlichen konstant ist.

5. Breitbandiger optischer Verstärker nach Anspruch 4, wobei die zusätzliche Dämpfung durch eine Dämpfungskomponente erzeugt wird, die zwischen einem ersten Teil und einem zweiten Teil der ersten optischen Verstärkungsfaser und/oder stromaufwärts und/oder stromabwärts der gemeinsamen optischen Verstärkungsfaser vorgesehen ist.

6. Breitbandiger optischer Verstärker nach Anspruch 4 oder 5, wobei das Gain-Shaping-Filter zwischen einem ersten Teil und einem zweiten Teil der ersten optischen Verstärkungsfaser oder stromaufwärts oder stromabwärts der gemeinsamen optischen Verstärkungsfaser vorgesehen ist und wobei mindestens ein Anteil der zusätzlichen Dämpfung in dem ersten Gain-Shaping-Filter enthalten ist.

7. Breitbandiger optischer Verstärker nach einem der vorhergehenden Ansprüche, wobei das Verhältnis der Gesamtlängen der Verstärkungsfasern für das zweite Band und das erste Band im Vergleich zu der effizienzoptimierten Auslegung um 20 %, vorzugsweise um 40 %, bevorzugter um 50 % und noch bevorzugter um 60 % verringert ist.

8. Verfahren zur Herstellung eines breitbandigen optischen Verstärkers nach Anspruch 1, wobei das Verfahren die folgenden Schritte umfasst:
(a) Erstellen eines mathematischen Modells des eine vorbestimmte Gesamtverstärkung bereitstellenden breitbandigen optischen Verstärkers, das dazu eingerichtet ist, die wellenlängenabhängige Rauschzahl des breitbandigen optischen Verstärkers in Abhängigkeit von den optischen Eigenschaften der Komponenten der ersten und zweiten Stufe des breitbandigen optischen Verstärkers und von der optischen Pumpleistung, die der gemeinsamen optischen Verstärkungsfaser zugeführt wird, der optischen Pumpleistung, die der ersten optischen Verstärkungsfaser zugeführt wird, und der optischen Pumpleistung, die der zweiten optischen Verstärkungsfaser zugeführt wird, zu bestimmen, wobei die optischen Pumpleistungen derart bestimmt werden, dass ein vorbestimmter Wert einer optischen Gesamtverstärkung des breitbandigen optischen Verstärkers erreicht wird;
(b) Bestimmen der effizienzoptimierten Auslegung des breitbandigen optischen Referenzverstärkers unter Verwendung des mathematischen Modells;
(c) Bestimmen eines Maximalwerts der wellenlängenabhängigen Rauschzahl des breitbandigen optischen Referenzverstärkers als Referenzwert;
(d) Bestimmen einer modifizierten Auslegung, die im Wesentlichen dieselbe Gesamtverstärkung wie die effizienzoptimierte Auslegung aufweist und die im Vergleich zu der effizienzoptimierten Auslegung des breitbandigen optischen Referenzverstärkers eine vergrößerte Länge der gemeinsamen Verstärkungsfaser und mindestens eines der folgenden Auslegungsmerkmale aufweist:
(i) einen vorbestimmten verringerten Wert der optischen Pumpleistung der gemeinsamen optischen Pumpquelle;
(ii) eine zusätzliche Dämpfung, die innerhalb des ersten optischen Bandes zu dem ersten Zweig der zweiten Stufe hinzugefügt ist;
(iii) eine zusätzliche Dämpfung, die innerhalb des ersten optischen Bandes zu der ersten Stufe hinzugefügt ist;
(iv) eine vergrößerte Gesamtlänge der gemeinsamen optischen Verstärkungsfaser und der ersten optischen Verstärkungsfaser;
(e) Bestimmen eines Maximalwerts der wellenlängenabhängigen Rauschzahl der modifizierten Auslegung als Auslegungswert;
(f) Verwenden der modifizierten Auslegung zum Aufbauen eines entsprechenden physischen breitbandigen optischen Verstärkers, wenn der Auslegungswert niedriger als der Referenzwert ist.

9. Verfahren nach Anspruch 8, wobei mindestens eines der Merkmale aus der Gruppe bestehend aus einem vorbestimmten verringerten Wert der optischen Pumpleistung der gemeinsamen optischen Pumpquelle, einer zusätzlichen Dämpfung, die innerhalb des ersten optischen Bandes zu dem ersten Zweig der zweiten Stufe hinzugefügt ist, einer zusätzlichen Dämpfung, die innerhalb des ersten optischen Bandes zu der ersten Stufe hinzugefügt ist, und einer vergrößerten Gesamtlänge der gemeinsamen optischen Verstärkungsfaser und der ersten optischen Verstärkungsfaser festgelegt wird und die entsprechende vergrößerte Länge der gemeinsamen Verstärkungsfaser unter Verwendung des mathematischen Modells bestimmt wird.

10. Verfahren nach einem der Ansprüche 8 bis 9, wobei die Schritte (d) und (e) des Anspruchs 8 wiederholt werden, bis der jeweilige Auslegungswert gleich einem vorbestimmten Schwellenwert oder niedriger als dieser ist.

11. Verfahren nach einem der Ansprüche 8 bis 10, wobei die modifizierte Auslegung, die zum Aufbauen eines entsprechenden physischen breitbandigen optischen Verstärkers verwendet wird, eine Leistungsumwandlungseffizienz (power conversion efficiency) bereitstellt, die gleich einem vorbestimmten Minimalwert oder höher als dieser ist.

12. Verfahren nach einem der Ansprüche 8 bis 11, wobei das erste und/oder zweite Gain-Shaping-Filter als Gain-Flattening-Filter ausgeführt ist.

## Revendications

1. Amplificateur optique à large bande (300)
(a) configuré pour amplifier optiquement un signal optique qui est reçu au niveau d'un port d'entrée d'amplificateur et qui comprend des premières composantes spectrales se trouvant au sein d'une première bande optique prédéterminée couvrant une première plage de longueurs d'onde et des secondes composantes spectrales se trouvant au sein d'une seconde bande optique prédéterminée couvrant une seconde plage de longueurs d'onde qui ne chevauche pas la première plage de longueurs d'onde, et pour délivrer en sortie le signal optique amplifié à un port de sortie d'amplificateur, dans lequel l'amplificateur optique à large bande (300) est configuré pour fournir un gain optique total prédéterminé,
(b) l'amplificateur optique à large bande (300) comprenant un premier étage et un second étage,
(c) dans lequel le premier étage comprend une fibre d'amplification optique commune et une source de pompe optique commune configurée pour apporter de la puissance de pompe optique dans la fibre d'amplification optique commune,
(d) le premier étage étant configuré pour amplifier toutes les composantes spectrales du signal optique et pour apporter un signal optique amplifié au second étage, dans lequel un gain dépendant de la longueur d'onde de la fibre d'amplification optique commune pour les premières composantes spectrales est plus élevé que pour les secondes composantes spectrales,
(e) le second étage comprenant une première et une seconde branche et étant configuré pour apporter les premières composantes spectrales amplifiées du signal optique amplifié à la première branche, pour apporter les secondes composantes spectrales amplifiées du signal optique amplifié à la seconde branche, pour amplifier encore les premières et secondes composantes spectrales amplifiées au sein des première et seconde branches, et pour combiner et délivrer en sortie les premières et secondes composantes spectrales encore amplifiées sous forme de signal optique amplifié au niveau du port de sortie d'amplificateur,
(f) dans lequel la première branche du second étage comprend une première fibre d'amplification optique et une première source de pompe optique configurée pour apporter de la puissance de pompe optique dans la première fibre d'amplification optique et un premier filtre de mise en forme de gain optique et dans lequel la seconde branche du second étage comprend une seconde fibre d'amplification optique et une seconde source de pompe optique configurée pour apporter de la puissance de pompe optique dans la seconde fibre d'amplification optique et un second filtre de mise en forme de gain optique,
(g) dans lequel la puissance de pompe optique de la source de pompe optique commune, la puissance de pompe optique des première et seconde sources de pompe optique, la caractéristique d'atténuation spectrale des premier et second filtres de mise en forme de gain et la longueur de la fibre d'amplification commune et la longueur des première et seconde fibres d'amplification sont déterminées de telle sorte qu'une évolution spectrale prédéterminée du gain est obtenue,
**caractérisé en ce que**
(h) la longueur de la fibre d'amplification commune est supérieure à la longueur de la fibre d'amplification commune d'un amplificateur optique à large bande (200) de référence d'une conception à efficacité optimisée, ayant une structure identique et comportant, à l'exception de la longueur de la fibre d'amplification commune et des longueurs des première et seconde fibres d'amplification, des composants identiques, dans lequel cette augmentation de longueur de la fibre d'amplification commune est déterminée de telle sorte que l'amplificateur optique à large bande (300) présente une valeur maximale inférieure d'un facteur de bruit dépendant de la longueur d'onde au sein des première et seconde bandes optiques par rapport à l'amplificateur optique à large bande (200) comparable,
(i) dans lequel une telle augmentation de la longueur de la fibre d'amplification commune et une réduction simultanée de la valeur minimale du facteur de bruit dépendant de la longueur d'onde par rapport à la valeur minimale du facteur de bruit dépendant de la longueur d'onde de la conception à efficacité optimisée sont obtenues par une ou plusieurs des caractéristiques de conception suivantes :
(i) diminution de la puissance de pompe optique de la source de pompe optique commune ;
(ii) ajout d'une atténuation supplémentaire au sein de la première bande optique à la première branche du second étage ;
(iii) ajout d'une atténuation supplémentaire (322) au sein de la première bande optique au premier étage ;
(iv) augmentation de la longueur totale de la fibre d'amplification optique commune et de la première fibre d'amplification optique.

2. Amplificateur optique à large bande selon la revendication 1, dans lequel un composant d'atténuation supplémentaire est prévu au sein du premier étage commun, lequel est configuré pour atténuer les premières composantes spectrales dans une mesure plus importante que les secondes composantes spectrales.

3. Amplificateur optique à large bande selon la revendication 2, dans lequel le composant d'atténuation supplémentaire est prévu entre une première partie et une seconde partie de la fibre d'amplification optique commune ou en aval de la fibre d'amplification optique commune.

4. Amplificateur optique à large bande selon l'une des revendications 1 à 3, dans lequel une atténuation supplémentaire est ajoutée à la première branche du second étage, laquelle est de préférence essentiellement constante dans la première bande.

5. Amplificateur optique à large bande selon la revendication 4, dans lequel l'atténuation supplémentaire est créée par un composant d'atténuation qui est prévu entre une première partie et une seconde partie de la première fibre d'amplification optique et/ou en amont et/ou en aval de la fibre d'amplification optique commune.

6. Amplificateur optique à large bande selon la revendication 4 ou 5, dans lequel le filtre de mise en forme de gain est prévu entre une première partie et une seconde partie de la première fibre d'amplification optique ou en amont ou en aval de la fibre d'amplification optique commune et dans lequel au moins une partie de l'atténuation supplémentaire est incluse dans le premier filtre de mise en forme de gain.

7. Amplificateur optique à large bande selon l'une quelconque des revendications précédentes, dans lequel le rapport entre longueurs totales des fibres d'amplification pour la seconde bande et la première bande est réduit de 20 %, de préférence de 40 %, plus préférablement de 50 % et encore plus préférablement de 60 % par rapport à la conception à efficacité optimisée.

8. Procédé de fabrication d'un amplificateur optique à large bande selon la revendication 1, le procédé comprenant les étapes consistant à :
(a) créer un modèle mathématique de l'amplificateur optique à large bande fournissant un gain total prédéterminé, qui est configuré pour déterminer le facteur de bruit dépendant de la longueur d'onde de l'amplificateur optique à large bande en fonction des propriétés optiques des composants des premier et second étages de l'amplificateur optique à large bande et de la puissance de pompe optique qui est apportée à la fibre d'amplification optique commune, de la puissance de pompe optique qui est apportée à la première fibre d'amplification optique et de la puissance de pompe optique qui est apportée à la seconde fibre d'amplification optique, dans lequel les puissances de pompe optique sont déterminées de telle sorte qu'une valeur prédéterminée d'un gain optique total de l'amplificateur optique à large bande est obtenue ;
(b) déterminer la conception à efficacité optimisée de l'amplificateur optique à large bande de référence à l'aide du modèle mathématique ;
(c) déterminer une valeur maximale du facteur de bruit dépendant de la longueur d'onde de l'amplificateur optique à large bande de référence en tant que valeur de référence ;
(d) déterminer une conception modifiée qui présente essentiellement le même gain total que la conception à efficacité optimisée et qui a, par rapport à la conception à efficacité optimisée de l'amplificateur optique à large bande de référence, une longueur augmentée de la fibre d'amplification commune et au moins l'une des caractéristiques de conception suivantes :
(i) une valeur diminuée prédéterminée de la puissance de pompe optique de la source de pompe optique commune ;
(ii) une atténuation supplémentaire ajoutée au sein de la première bande optique à la première branche du second étage ;
(iii) une atténuation supplémentaire ajoutée au sein de la première bande optique au premier étage ;
(iv) une longueur totale augmentée de la fibre d'amplification optique commune et de la première fibre d'amplification optique ;
(e) déterminer une valeur maximale du facteur de bruit dépendant de la longueur d'onde de la conception modifiée en tant que valeur de conception ;
(f) utiliser la conception modifiée pour mettre en place un amplificateur optique à large bande physique correspondant si la valeur de conception est inférieure à la valeur de référence.

9. Procédé selon la revendication 8, dans lequel au moins l'une des caractéristiques du groupe constitué par une valeur diminuée prédéterminée de la puissance de pompe optique de la source de pompe optique commune, une atténuation supplémentaire ajoutée au sein de la première bande optique à la première branche du second étage, une atténuation supplémentaire ajoutée au sein de la première bande optique au premier étage et une longueur totale augmentée de la fibre d'amplification optique commune et de la première fibre d'amplification optique est spécifiée et la longueur augmentée correspondante de la fibre d'amplification commune est déterminée à l'aide du modèle mathématique.

10. Procédé selon l'une des revendications 8 et 9, dans lequel les étapes (d) et (e) de la revendication 8 sont répétées jusqu'à ce que la valeur de conception respective soit égale ou inférieure à une valeur seuil prédéterminée.

11. Procédé selon l'une des revendications 8 à 10, dans lequel la conception modifiée qui est utilisée pour mettre en place un amplificateur optique à large bande physique correspondant fournit une efficacité de conversion de puissance égale ou supérieure à une valeur minimale prédéterminée.

12. Procédé selon l'une des revendications 8 à 11, dans lequel les premier et/ou second filtres de mise en forme de gain sont réalisés sous la forme d'un filtre d'aplatissement de gain.
